# EUROPEAN PATENT APPLICATION

(11) **EP 0 700 212 A1**
(43) Date of publication of application: **06.03.1996**
(21) Application number: 95913371.1
(22) Date of filing: 29.03.1995
(51) Int. Cl.: H04N 7/18, B60R 1/00

(54) **DEVICE FOR CONFIRMATION OF REAR VIEW OF VEHICLE**

(30) Priority: 29.03.1994 JP 58868/94
(71) Applicant: KABUSHIKI KAISHA TOSHIBA, Kawasaki-shi, Kanagawa-ken 210, Tokyo (JP)
(72) Inventor: KANUMA Toshinori, Yokohama-shi, Kanagawa 232 (JP); UOTA, Junichi, Fuchu-shi, Tokyo 183 (JP)
(74) Representative: Freed, Arthur Woolf
(86) International application number: JP9500593
(87) International publication number: WO9526610

(57) **Abstract**

A device mounted on a vehicle such as automobiles for confirmation of the rear view of the vehicle. Mounted to a door end of the vehicle is a miniature CCD camera (2) which picks up and indicate an image of the rear view of the door on a monitor (4). A door opening detecting mechanism (1) is provided for detecting beforehand an opening movement of the door of the vehicle from an access of a hand to a door knob and door unlocking, and when an opening movement of the door is detected, the camera (2), a camera angle control mechanism (3) and the monitor (4) are turned ON to start imaging by the camera, control of a camera angle and indication on the monitor. The camera angle control mechanism (3) turns the camera in a reverse direction by an angle, through which the door is opened, and controls a direction of the camera (2) to keep it constant. Accordingly, it is possible to urge a crew's safety confirmation at the time of getting-off through an indication representative of a rear view of the door and to have the crew visually identify information which are required for safety confirmation at the time of getting-off.

## Description

### Technical Field

The present invention relates to a rear safety checking apparatus for use with a vehicle such as a car.

### Related Art

In recent years, as video apparatuses, for example, imaging devices and displaying devices have been miniaturized and improved, imaging devices have been used for safety checking apparatuses that improve the safety of the driving of vehicles.

As a typical example of such safety checking apparatuses, a CCD camera is disposed at a rearmost portion of a vehicle. With the camera, a rear view image of the vehicle is picked up and the picked up image is displayed on a monitor disposed inside the vehicle. In this apparatus, views just behind the vehicle, which cannot be obtained with a rear view mirror and door mirrors, can be securely obtained with a monitor. Thus, this apparatus is very effective when the driver suddenly drives the vehicle in rear direction.

However, in this apparatus, since the pick-up-image range of the camera is limited to the behind of the rearmost portion of the vehicle. Thus, the camera cannot take images of other vehicles that are going to pass through the vehicle of the user. Consequently, an accident may take place in such a way that an opened door contacts another vehicle or moving substance that follows the vehicle of the user.

Of course, such an accident can be prevented when the passengers carefully watch the rear through the rear view mirror and the door mirrors when they open the doors. However, since the passengers of the vehicle tend to disregard safety checks, such an accident often takes place. Particularly, in a vehicle with door mirrors, when doors are opened, since the view directions of the door mirrors largely deviate from the rear of the vehicle, the passengers cannot properly check the rear of the vehicle.

In the conventional construction of this type, when the driver of the vehicle turns on the switch thereof or when the driver places the drive gear in the rear position, the system is turned on. Thus, such an apparatus is not suitable for urge the passengers who are getting off the vehicle to perform their safety check.

As described above, in the conventional rear safety checking apparatus for use with a vehicle, since the view image behind the rearmost portion of the vehicle is picked up and displayed, the obtained information is improper for safety check for passengers who are getting off the vehicle. In addition, the apparatus is also improper for urging the passengers who are getting off the vehicle to perform the safety check.

An object of the present invention is to solve such problems and to provide a rear safety checking apparatus for use with a vehicle for detecting door opening operation and for picking up images and displaying the rear views of the doors so as to allow the passengers who are getting off the vehicle to properly perform safety check.

### Disclosure of the Invention

A vehicle rear safety checking apparatus of the present invention, comprising a pick-up-image means for picking up an image behind a vehicle, a displaying means for displaying the image picked up by the pick-up-image means, a detecting means for detecting an opening operation of a door disposed on the vehicle, and a controlling means for causing the displaying means to display the image picked up by the pick-up-image means when the opening operation of the door is detected by the detecting means. The pick-up-image means is disposed on a door end, preferably at a door end portion so as to pick up the image behind the door of the vehicle. In addition, a means for keeping the pick-up-image direction of the pick-up-image means constant against the opening operation of the door is disposed. As an example of the detecting means, the lock releasing operation of the door and the approaching operation or the contacting operation of a substance to the door knob inside the vehicle is detected as the door opening operation.

According to the vehicle rear safety checking apparatus of the present invention, the detecting means detects the door opening operation. When the detecting means detects the door opening operation, the controlling means causes the pick-up-image means to start picking up the rear image of the opened door and the displaying means to display the picked up image. Thus, according to the present invention, the apparatus can urge the passengers who are getting off the vehicle to perform safety check with the image of the rear of the opened door and provide the passengers who are getting off the vehicle with information necessary for the safety check.

### Brief Description of Drawings

Fig. 1 is a block diagram showing the overall construction of a vehicle rear safety checking apparatus according to an embodiment of the present invention;
Fig. 2 is a schematic diagram showing the construction of a door open state detecting system;
Fig. 3 is a schematic view showing a door knob having an infrared ray sensor;
Fig. 4 is a schematic diagram showing the construction of a camera and a camera angle controlling system;
Fig. 5 is a block diagram showing the construction of a controller of the camera angle controlling system;
Fig. 6 is a flow chart showing an operating procedure of a main CPU;
Fig. 7 is a flow chart showing an operating procedure of a controller;
Fig. 8 is a perspective view showing a vehicle that is equipped with the vehicle rear safety checking apparatus according to the embodiment;
Fig. 9 is a block diagram showing the overall construction of the vehicle rear safety checking apparatus according to another embodiment of the present invention;
Fig. 10 is a flow chart showing an operating procedure of the vehicle rear safety checking apparatus shown in Fig. 9;
Fig. 11 is a block diagram showing the overall construction of a vehicle rear safety checking apparatus according to another embodiment of the present invention;
Fig. 12 is a plan view showing a four-door type vehicle;
Fig. 13 is a flow chart showing an operating procedure of the vehicle rear safety checking apparatus shown in Fig. 11;
Fig. 14 is a perspective view showing another example of the vehicle that is equipped with the vehicle rear safety checking apparatus shown in Fig. 11;
Fig. 15 is a block diagram showing a modification example of the construction of the vehicle rear checking apparatus shown in Fig. 11;
Fig. 16 is a table showing the relation between door open/closed states and activated cameras of the vehicle rear safety checking apparatus shown in Fig. 11;
Fig. 17 is a flow chart showing an operating procedure of another embodiment of the present invention;
Fig. 18 is a table showing the relation between door open/closed states and activated cameras of the vehicle rear safety checking apparatus shown in Fig. 17;
Fig. 19 is a flow chart showing an operating procedure of another embodiment of the present invention;
Fig. 20 is a table showing the relation between door open/closed states and activated cameras of the vehicle rear safety checking apparatus shown in Fig. 19;
Fig. 21 is a flow chart showing an operating procedure of another embodiment of the present invention;
Fig. 22 is a table showing the relation between door open/closed states and activated cameras of the vehicle rear safety checking apparatus shown in Fig. 21;
Fig. 23 is a schematic diagram showing an example of a camera image priority displaying method;
Fig. 24 is a schematic diagram showing another example of the camera image priority displaying method;
Fig. 25 is a flow chart showing an operating procedure of another embodiment of the present invention;
Fig. 26 is a block diagram showing the overall construction of a vehicle rear safety checking apparatus according to another embodiment of the present invention;
Fig. 27 is a perspective view showing the disposed position of a photo-coupler for detecting the exposure of a CCD camera of the vehicle rear safety checking apparatus shown in Fig. 26; and
Fig. 28 is a flow chart showing an operating procedure of another embodiment of the present invention.

### Best Modes for Carrying out the Invention

Next, best modes for carrying out the present invention will be described with reference to the accompanying drawings.

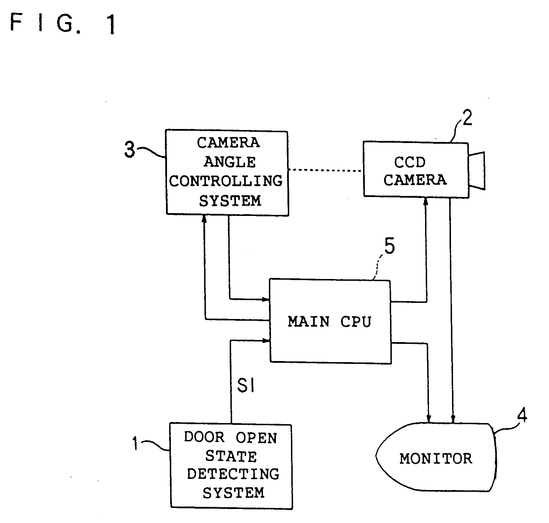

Fig. 1 is a block diagram showing the overall construction of the vehicle rear safety checking apparatus according to an embodiment of the present invention.

As shown in Fig. 1, the vehicle rear safety checking apparatus comprises a door open state detecting system 1, a CCD small camera 2, a camera angle controlling system 3, a monitor 4, and a main CPU 5. The door open state detecting system 1 detects the opening operation of a door of the vehicle. The CCD small camera 2 picks up the rear image of the door. The camera angle controlling system 3 keeps the direction (pick-up-image direction) of the camera 2 constant. The monitor 4 displays a door rear image picked up by the camera 2. The main CPU 5 totally controls each constructional portion of the apparatus.

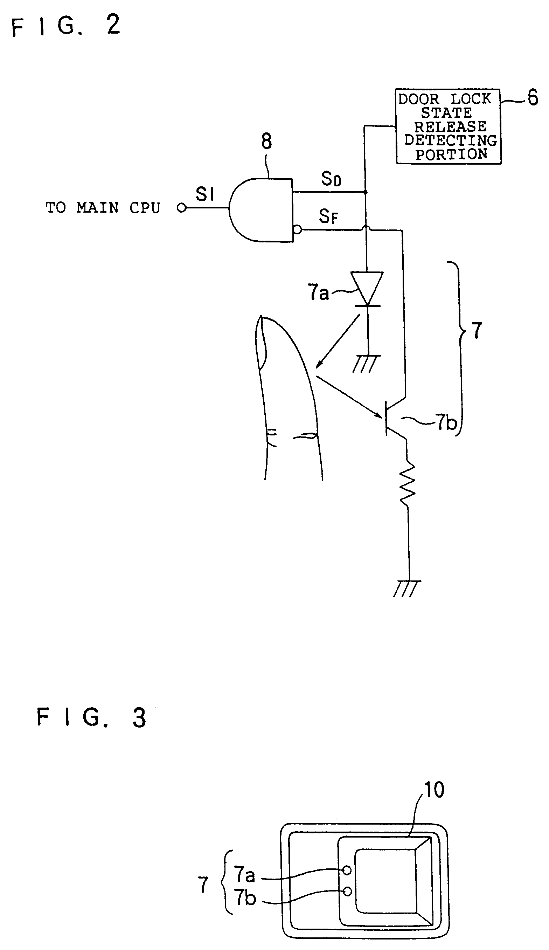

Fig. 2 is a schematic diagram showing an example of the construction of the door open state detecting system 1. As shown in Fig. 2, the door open state detecting system 1 comprises a door lock release state detecting portion 6, an infrared ray sensor 7, and an AND circuit 8. The door lock release state detecting portion 6 detects the release state of the door lock. The infrared ray sensor 7 is constructed of a photo-diode 7a and a photo-transistor 7b and detects the touching operation of the door knob inside the vehicle. The AND circuit 8 ANDs a detection signal S_{D} received from the door lock release state detecting portion 6 and the inverted signal of a detection signal S_{F} received from the infrared ray sensor 7 and outputs the resultant signal as a door open state detection signal S1. The door open state detection signal S1 is supplied to the main CPU 5.

As shown in Fig. 3, the photo-diode 7a and the photo-transistor 7b are disposed at positions so that when a passenger of the vehicle approaches his (her) hand to the door knob 10 in the vehicle, an infrared ray signal radiated by the photo-diode 7a is reflected by the hand of the passenger and then entered into the photo-transistor 7b.

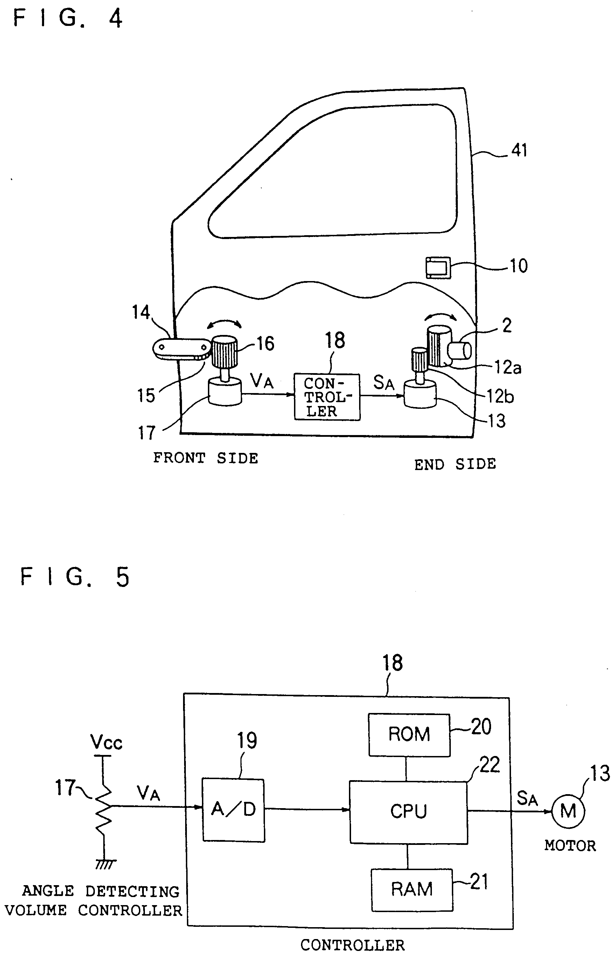

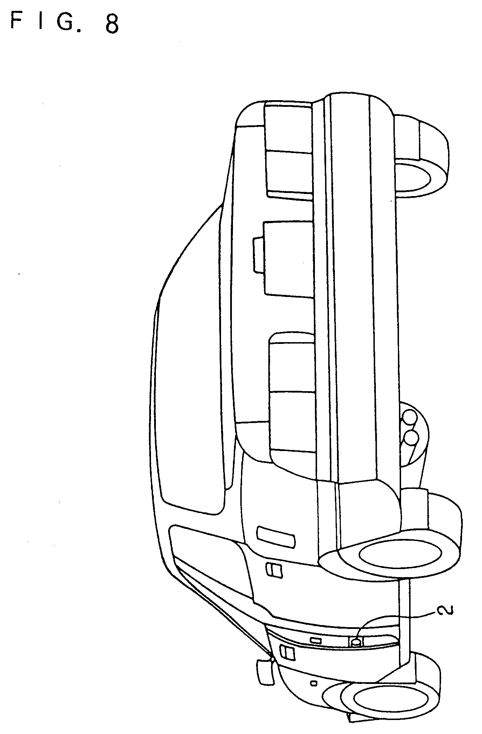

Fig. 4 is a schematic diagram showing the construction of the camera 2 and the camera angle controlling system 3. As shown in Fig. 4, the camera 2 is disposed at a door end portion so that it is exposed to the outside when the door is open (see Fig. 8). The camera 2 is connected to a motor 13 through gears 12a and 12b. With the motor 13, the camera 2 can be rotated within predetermined angles on a nearly horizontal plane against the road surface.

In Fig. 4, reference numeral 14 is a door hinge. One end portion of the door hinge 14 is secured to the main body side of the vehicle. The other end portion of the door hinge 14 is movably inserted into the door 41. The other end portion of the door hinge 14 has a gear portion 15. The gear portion 15 is connected to an angle detecting volume controller 17 through a gear 16. In other words, as the door 41 is opened or closed, the door hinge 14 is rotated about a fixed point on the vehicle main body side, the rotation of the door hinge 14 is transmitted to the angle detecting volume controller 17 through the gear 16. The amount of the rotation of the door hinge 14 is detected as a voltage V_{A}. The voltage V_{A} detected by the angle detecting volume controller 17 is supplied to the controller 18 at predetermined time intervals.

As shown in Fig. 5, the controller 18 comprises an A/D converting portion 19, a ROM 20, a RAM 21, and a CPU 22. The A/D converting portion 19 converts an analog signal of the voltage V_{A} received from the angle detecting volume 17 into a digital signal. The ROM 20 that fixedly stores values of door open/close angles corresponding to voltage values and so forth. The RAM 21 stores the value of a door open/close angle sampled one cycle before. The CPU 22 executes an arithmetic operation process for controlling the camera angle.

Next, the operation of the vehicle rear safety checking apparatus according to the embodiment will be described.

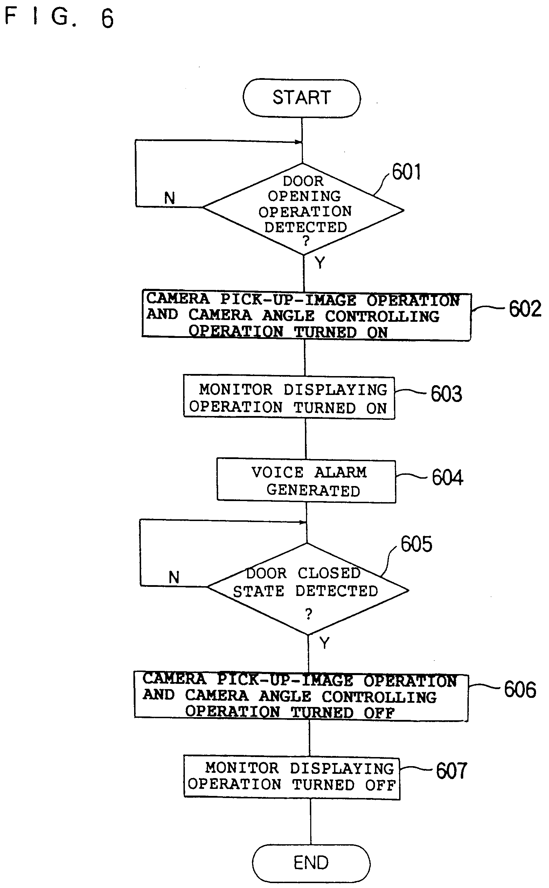

Fig. 6 is a flow chart showing the overall operation of the apparatus. First, the door open state detecting system 1 detects a door opening operation of a passenger of the vehicle as follows. As shown in Fig. 2, the door lock release state detecting portion 6 detects the release state of the door lock. Thereafter, the infrared ray sensor 7 disposed at the door knob 10 shown in Fig. 3 detects the touching operation of the hand of the passenger to the door knob 10.

In other words, the door lock release state detecting portion 6 sets the level of the detection signal S_{D} to HIGH. When the detection signal S_{D} becomes HIGH, the photo-diode 6a is turned on. When the passenger approaches his hand to the door knob 10, the infrared ray signal of the photo-diode 6a is reflected by the hand and entered into the photo-transistor 6b. Thus, the photo-transistor 6b is turned on and a current flows therein. Consequently, the level of the collector voltage of the photo-transistor changes from HIGH to LOW. The resultant collector voltage is supplied as a detection signal S_{F} of the infrared ray sensor 6 to the AND circuit 8 through an inverter. Thus, a door open state detection signal S1 that is the output signal of the AND circuit 8 becomes HIGH.

When the main CPU 5 receives the door open state detection signal S1 (HIGH) and thereby knows that the door opening operation has been performed (at step 601), it sends an ON signal to the camera 2, the camera angle controlling system 3, and the monitor 4. Thus, the rear view image behind the door is picked up by the camera 2 and the camera angle is controlled (at step 602). In addition, the picked up image is displayed on the monitor 4 (at step 603). Thereafter, a sound alarm for urging the passengers who are getting off the vehicle to perform their safety check (at step 604). This alarm is performed by a synthesized voice alarm message or a simple alarm sound. When the CPU 5 knows that the door has been closed (at step 605), it sends an OFF signal to the camera 2, the camera angle control system 3, and the motor 4 and completes the operation (at steps 606 and 607).

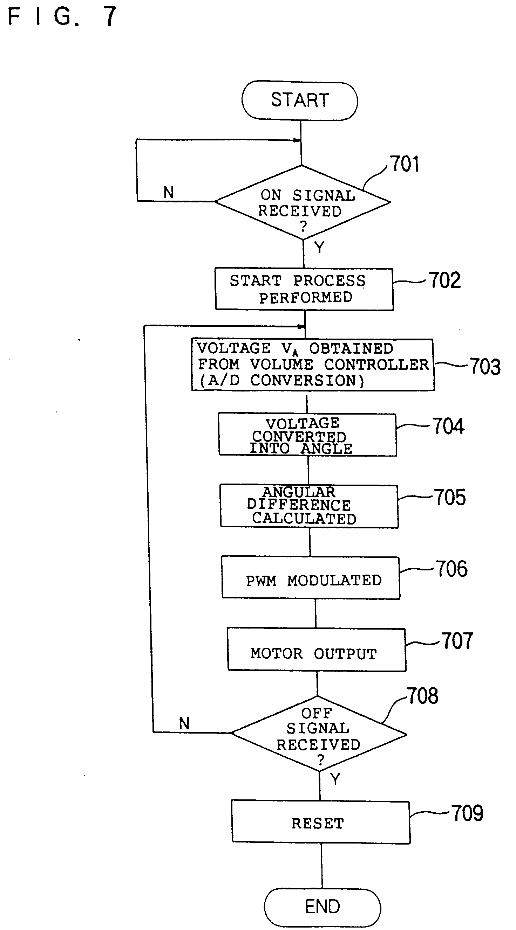

Next, the operation of the camera angle controlling system 3 will be described with reference to a flow chart of Fig. 7.

When the CPU 22 of the controller 18 receives the ON signal from the main CPU 5 (at step 701), the CPU 22 performs a start process for the camera angle controlling system 3 (at step 702). Thereafter, the CPU 22 repeats the following process at predetermined time intervals.

First, the CPU 22 receives the voltage V_{A} corresponding to the amount of rotation of the door hinge 14 from the angle detecting volume controller 17 through the A/D converting portion 17 (at step 703). Thereafter, the CPU 22 reads the value of the door open/close angle corresponding to the voltage value received from the ROM 20 (at step 704), subtracts the value of the door open/close angle one cycle before stored in the RAM 21 from the read value of the door open/close angle (at step 705). The CPU 22 updates the content of the RAM 21 with the value of the door open/close angle read from the ROM 20. In addition, the CPU 22 PWM-modulates the information of the obtained angular difference (at step 706) and supplies the PWM modulation signal as a drive signal S_{A} to the motor 13 through an amplifying circuit (not shown) (at step 707). Thereafter, the flow returns to step 703. At step 703, the CPU 22 reads the voltage V_{A} from the angle detecting volume controller 17 and starts the process of the next cycle. Thus, the CPU 22 causes the camera 2 to rotate corresponding to the angle of the opened door in the reverse direction so as to keep the (pick-up-image) direction of the camera 2 constant. When the CPU 22 receives the OFF signal from the main CPU 5 (at step 708), the CPU 22 performs the reset process (at step 709) and completes the operation of the camera angle controlling system 3.

Thus, according to the vehicle rear safety checking apparatus of the embodiment, when the door opening operation is detected, the rear view image of the vehicle is picked up by the camera 2 disposed at the door end. The picked up image is displayed on the monitor 4 along with the alarm sound so as to urge the passengers who are getting off the vehicle to perform their safety check. In addition, the rear image of the vehicle, which is useful for the passengers who are getting off the vehicle to perform their safety check, can be provided.

Moreover, according to the vehicle rear safety checking apparatus of the embodiment, the pick-up-image direction of the camera 2 can be always kept constant regardless of the door open/close angle.

Next, another embodiment of the present invention will be described.

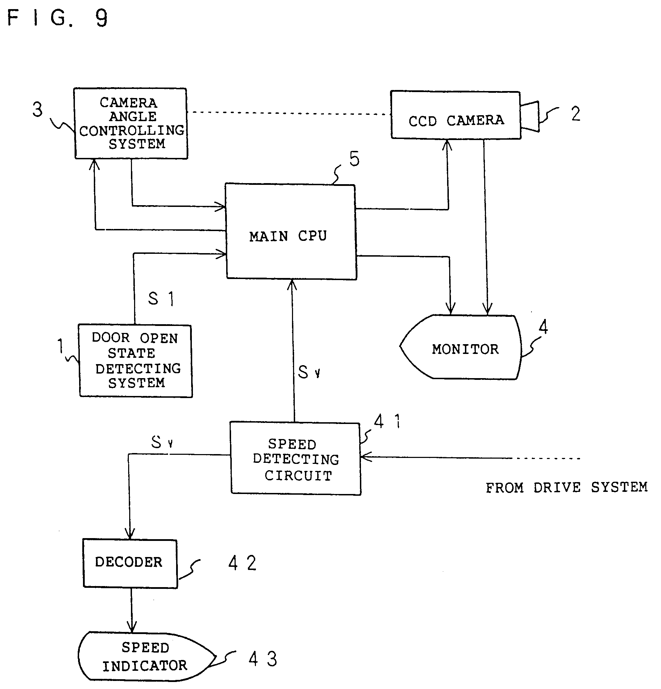

Fig. 9 is a block diagram showing the overall construction of a vehicle rear safety checking apparatus according to another embodiment of the present invention. In Fig. 9, for simplicity, similar portions to those in Fig. 1 are denoted by similar reference numerals and their description is described. In Fig. 9, reference numeral 41 is a speed detecting circuit that detects the speed of the vehicle corresponding to the information received from a vehicle drive system. A speed signal S_{V} is received from the speed detecting circuit 41. The speed signal S_{V} is decoded by a decoder 42 and then sent to a speed indicator 43. Thus, the driver of the vehicle knows the speed of the vehicle with the speed indicator. The speed signal S_{V} received from the speed detecting circuit 41 is also supplied to the main CPU 5. The main CPU 5 performs the following control corresponding to the speed signal S_{V}.

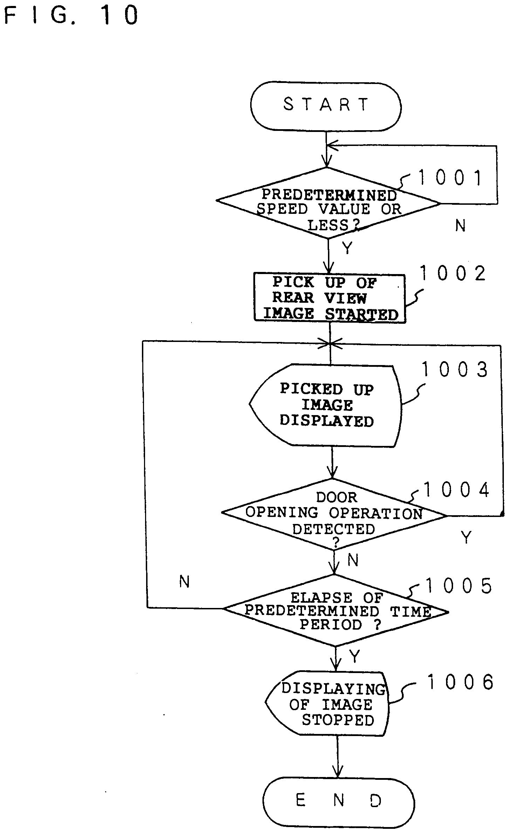

Fig. 10 is a flow chart showing the control of the main CPU 5 corresponding to the speed signal S_{V}. The main CPU 5 receives the speed signal S_{V} from the speed detecting circuit 41 and determines whether or not the current speed of the vehicle accords with a predetermined value or less (at step 1001). In this case, the predetermined value is almost zero. In other words, the predetermined value is a value equivalent to almost the stop state of the vehicle. More specifically, the predetermined value is a value equivalent to the state just before the vehicle is stopped. Thus, at step 1001, it is determined whether or not the vehicle is in the state just before it is stopped (this state includes the stop state of the vehicle). When the speed accords with the predetermined value or less, the main CPU 5 sends the ON signal to the camera 2, the camera angle controlling system 3, and the monitor 4. Thus, the rear view image behind the door is picked up by the camera 2 and the camera angle is controlled (at step 1002). Consequently, the rear image behind the door is displayed on the monitor 4 (at step 1003). Thereafter, the main CPU 5 determines whether or not the door opening operation has been performed in a predetermined time period after the speed becomes the predetermined value or less (at steps 1004 and 1005). When the door opening operation is performed, the rear image behind the door is continuously displayed. Even if the predetermined time period elapses, until the door is closed, the rear image behind door is continuously displayed. On the other hand, if the door opening operation is not performed in the predetermined time period, the main CPU 5 sends the OFF signal to the camera 2, the camera angle controlling system 3, and the monitor 4 so as to cause the monitor 4 to stop displaying the rear image behind the door (at step 1006).

Thus, according to the embodiment (shown in Fig. 9), since the rear image of the vehicle is displayed on the monitor just before the vehicle is stopped, the apparatus can urge the passengers who are getting off the vehicle to perform their safety check at more proper timings. In addition, if the door opening operation is not performed in the predetermined time period after the speed decreases to the predetermined value or less, the display of the rear image is stopped, thereby suppressing the power consumption of the apparatus.

Next, another embodiment of the present invention will be described.

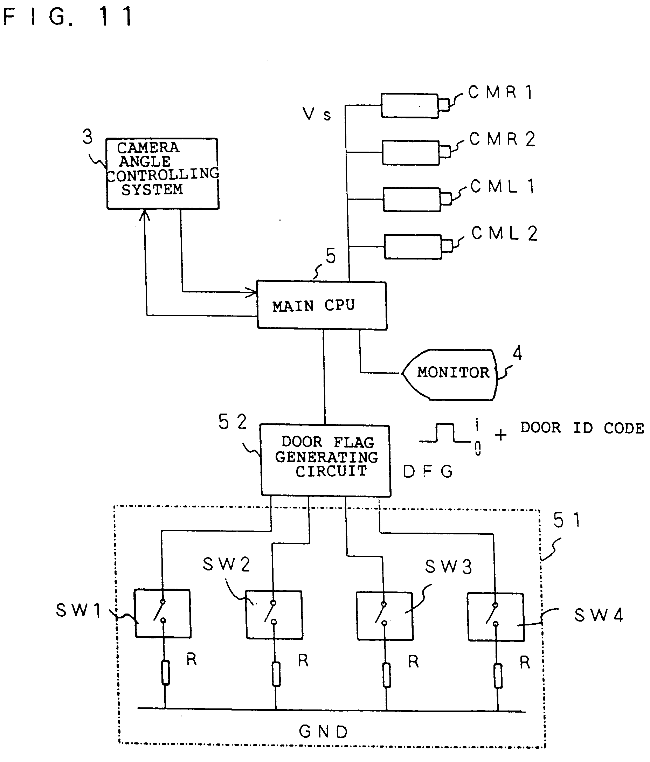

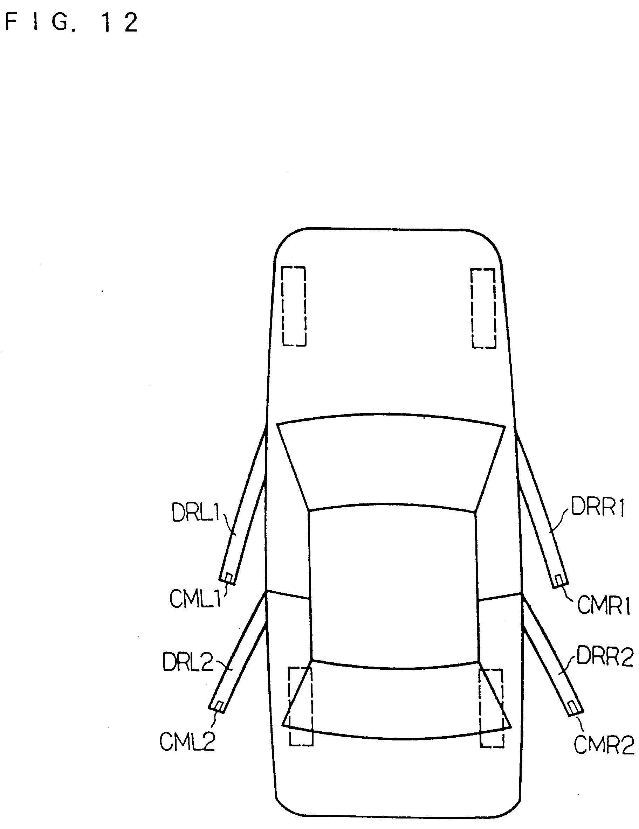

Fig. 11 is a block diagram showing the overall construction of a vehicle rear safety checking apparatus according to another embodiment of the present invention. In Fig. 11, for simplicity, similar portions as those shown in Fig. 1 are denoted by similar reference numerals and their description is omitted. In Fig. 11, CMR1, CMR2, CML1, and CML2 are cameras. As shown in Fig. 12, these cameras CMR1, CMR2, CML1, and CML2 are disposed at doors DRR1, DRR2, DRL1, and DRL2 of a four-door type vehicle, respectively. The camera CMR1 is disposed at the front right side door DRR1 of the vehicle. The camera CMR2 is disposed at the rear right side door DRR2 of the vehicle. The camera CML1 is disposed at the front left side door DRL1 of the vehicle. The camera CML2 is disposed at the rear left side door DRL2 of the vehicle. In Fig. 11, reference numeral 51 is a door open state detecting system that detects opening operations (or their pre-operations) of the doors of the vehicle. The door open state detecting system 51 has four switches SW1, SW2, SW3, and SW4. The switches SW1, SW2, SW3, and SW4 become open and closed states when the doors DRR1, DRR2, DRL1, and DRL2 are closed and opened, respectively. Reference numeral 52 is a door flag generating circuit that identifies the open/closed states of the switches SW1 to SW4, logically generates "H" level flag information when one of the switches becomes the off state, adds off-state switch ID information to the flag information, and sends the resultant information to the main CPU 5. The main CPU 5 executes the following control corresponding to the flag information and so forth received from a door flag generating circuit 52.

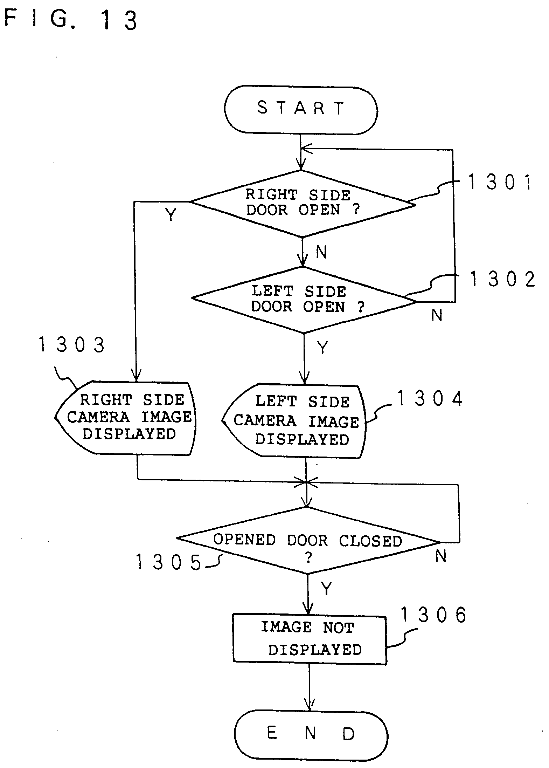

Fig. 13 is a flow chart showing the control of the main CPU 5 corresponding to the flag information. When the flag information is supplied to the main CPU 5, it checks the switch ID information included in the flag information so as to determine which door has been opened (at steps 1301 and 1302). Thus, if the right side door DRR1 or DRR2 has been opened, the main CPU 5 causes the image picked up by the camera CMR1 or CMR2 disposed at the right side door DRR1 or DRR2 to be displayed on the monitor 4 (at step 1303). On the other hand, when the left side door DRL1 or DRL2 has been opened, the main CPU 5 causes the image picked up by the camera CML1 or CML2 disposed at the left side door DRL1 or DRL2 to be displayed on the monitor 4 (at step 1304).

In other words, according to the embodiment (shown in Fig. 11), a camera image on the side of which a door is opened first is displayed with priority. Thus, a camera image on the side of which a door is opened secondly is not displayed.

When the main CPU 5 knows that the door that has been opened is closed corresponding to the reset state of the flag information (at step 1305), the main CPU 5 causes the camera image on the opened door side to be stopped (at step 1306).

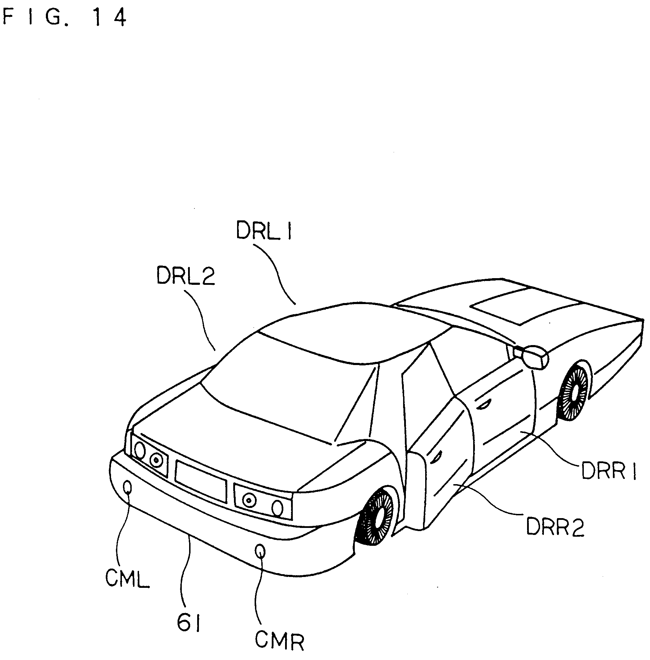

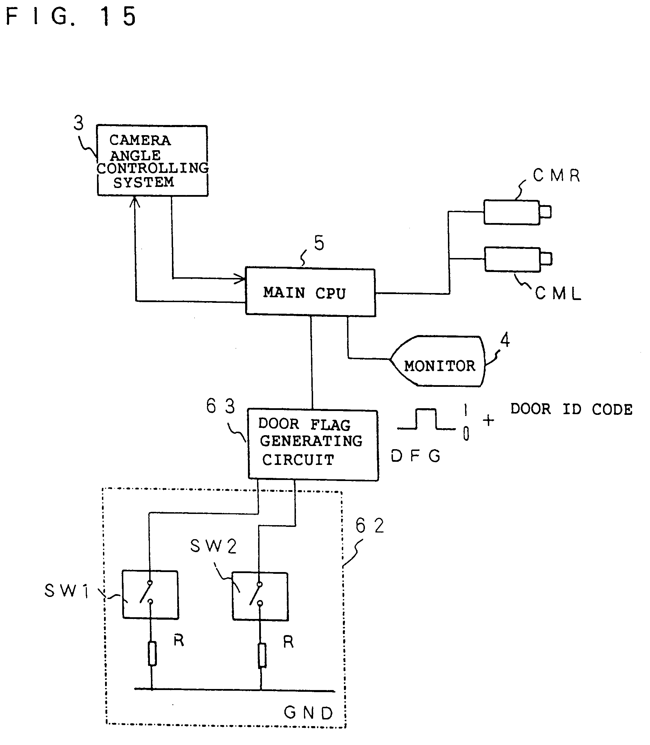

As shown in Fig. 14, the camera image selecting control is applicable to the construction of which cameras CMR and CML are disposed on the left and right of a rear bumper of the vehicle. Fig. 15 is a block diagram showing the overall construction of a vehicle rear side checking apparatus according to this embodiment. In the embodiment (shown in Fig. 15), a door open state detecting system 62 has two switches SW1 and SW2 corresponding to cameras CMR and CML. When the front/rear right side door of the vehicle is opened, the camera CMR is turned on until the door is closed. On the other hand, when the front/rear left side door of the vehicle is opened, the camera CML is turned on until the door is opened. Reference numeral 63 is a door flag generating circuit that determines the open/closed states of the switches SW1 and SW2, generates logical "H" level flag information when one of the switches is closed, adds close-state switch ID information to the flag information, and outputs the resultant information to the main CPU 5. Since the operation of the vehicle rear safety checking apparatus of this embodiment is the same as that of the above-described embodiments, the description thereof is omitted.

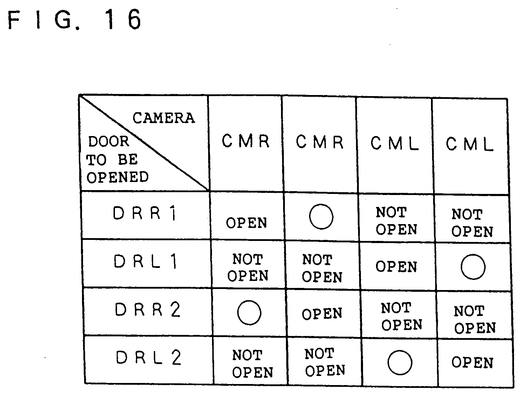

Fig. 16 is a table showing the relation between the open/closed states of the doors and the activated cameras. In the table, circles "O" represent that either the open state or closed state is possible.

Next, another embodiment of the present invention will be described.

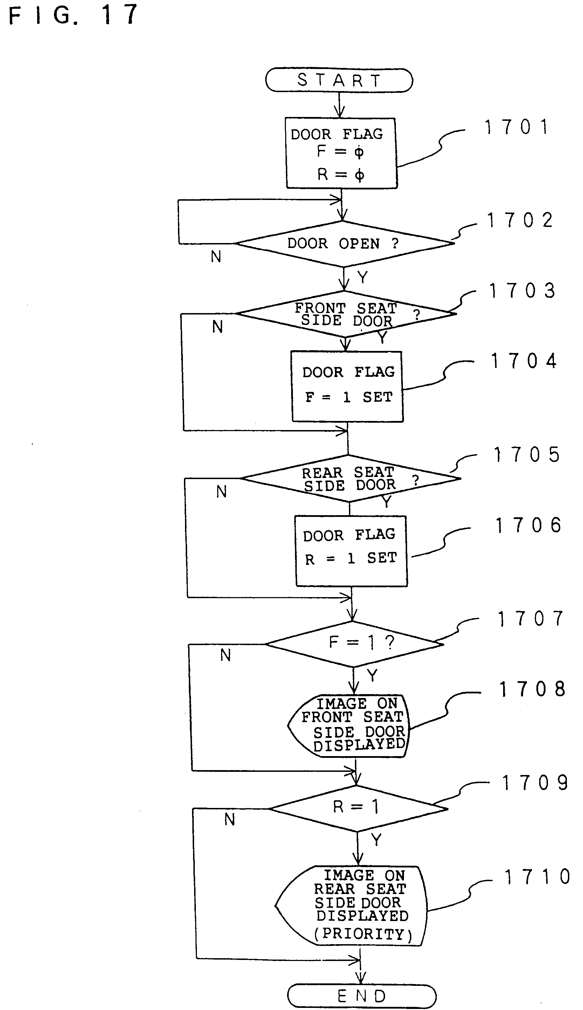

In this embodiment, the overall construction is the same as that shown in Fig. 11. However, in this embodiment, the main CPU 5 performs a camera image selecting control corresponding to opening operations of the doors of the vehicle. In other word, in the embodiment, the priority orders are designated to the front seats and the rear seats. When a rear seat side door is opened, an image of the camera of the door is displayed with priority. Next, the detail control flow will be described with reference to a flow chart of Fig. 17.

In Fig. 17, F represents flag information corresponding to the front seat side doors and R represents flag information corresponding to the rear seat side doors. The door flag generating circuit 52 initializes the flag information F and R (namely, clears them to zero) (at step 1701). Thereafter, the door flag generating circuit 52 determines the open/closed states of the four switches SW1, SW2, SW3, and SW4 of the door open state detecting system 51 and checks the door opening operations of the doors (at step 1702). When at least one of the switches SW1 and SW3 is in the closed state (at step 1703), the door flag generating circuit 52 sets the flag information F corresponding to the front seat side doors, adds open-door ID information to the flag information, and outputs the resultant information to the main CPU 5 (at step 1704). Likewise, when at least one of the switches SW2 and SW4 is in the closed state (at step 1705), the door flag generating circuit 52 sets the flag information R corresponding to the rear seat side doors, adds the open-door ID information to the flag information, and sends the resultant information to the main CPU 5 (at step 1706).

The main CPU 5 successively reads the flag information F and R corresponding to the front seat side doors and the rear seat side doors. When the set state flag information that has been read first represents the front seat side doors, the corresponding camera is identified corresponding to the door ID information added to the flag information F and the camera image is displayed on the monitor 4 (at steps 1707 and 1708). When the flag information corresponding to the rear seat side doors is received, a camera image on the front seat side door is switched to a camera image on the rear seat side door as a priority image (at steps 1709 and 1710).

When the set state flag information that has been read first represents the rear seat side doors, a camera image on a rear seat side door is displayed.

Thus, according to the embodiment (shown in Fig. 17), when a front side door and a rear side door are opened even if the rear side door disturbs the pick-up-image operation of the camera of the front side door, since the image of the camera at the rear seat side door has priority over the image of the camera at the front seat side door, the rear image can be securely picked up and displayed on the monitor.

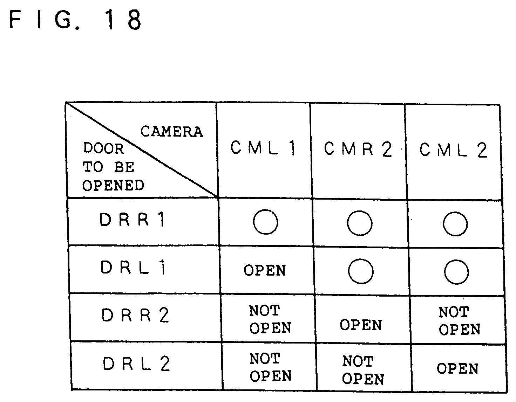

Fig. 18 is a table showing the relation between the open/closed states of the doors and the activated cameras.

Next, another embodiment of the present invention will be described.

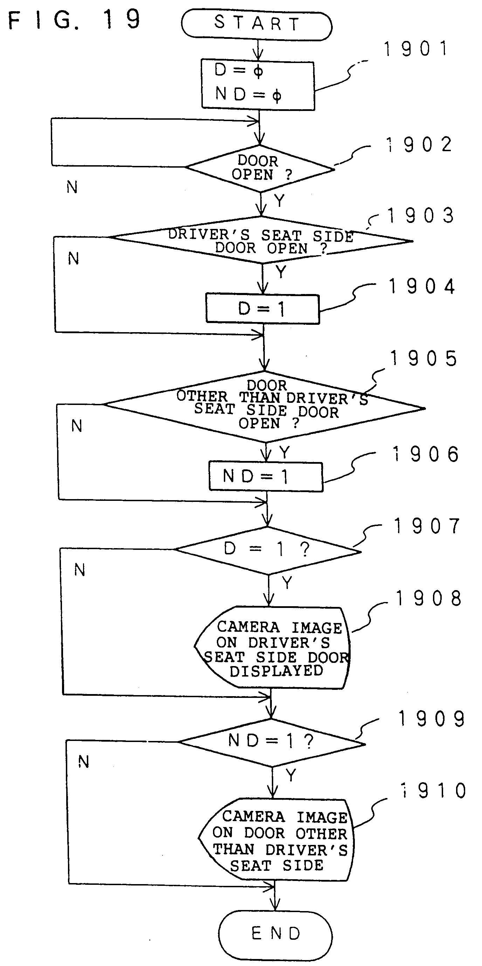

In this embodiment, the overall construction of the apparatus is the same as that shown in Fig. 11. However, in this embodiment, the main CPU 5 performs the following camera image selecting control corresponding to the opening operations of the doors of the vehicle. In other words, priority orders are designated to the driver's seat and passenger seats. When a door of other than the driver's seat is opened, an image of a camera at the door is displayed with priority. Next, the detailed control flow will be described with reference to a flow chart of Fig. 19.

In Fig. 19, D represents flag information corresponding to the driver's seat side door. ND represents flag information corresponding to the other seat side doors. The door flag generating circuit 52 initializes the flag information D and ND (namely, clears them to zero) (at step 1901), determines the open/closed states of the switches SW1, SW2, SW3, and SW4 of the door open state detecting system 51, and checks the opening operations of the doors of the vehicle (at step 1902). When the switch SW1 is in the closed state (at step 1903), the door flag generating circuit 52 sets the flag information D corresponding to the driver's seat side door, adds the ID information of the driver's seat side door to the flag information, and outputs the resultant information to the main CPU 5 (at step 1904). Likewise, when at least one of the switches SW2 to SW4 is in the closed state (at step 1905), the door flag generating circuit 52 sets the flag information ND corresponding to doors other than the driver's seat side door, adds the ID information of the opened door to the flag information, and outputs the resultant information to the main CPU 5 (at step 1906).

The main CPU 5 successively reads the flag information D and ND. When the set state flag information that has been read first is information corresponding to the driver's seat side door, a camera image on the driver's seat side door is displayed on the monitor 4 (at steps 1907 and 1908). Thereafter, when the set state flag information that has been read first is information corresponding to other than the driver's seat, a camera image on the driver's seat side door is switched to a camera image on other than the driver's seat side door as a priority image (at steps 1909 and 1910).

When the set state flag information that has been read first is information corresponding to other than the driver's seat, a camera image on other than the driver's seat side door is displayed.

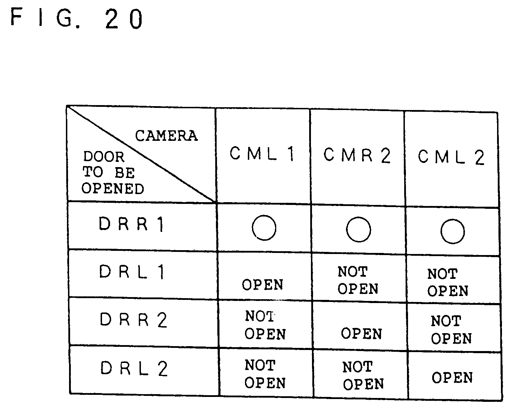

Fig. 20 is a table showing the relation between the open/closed states of the doors of the vehicle and the activated cameras.

Thus, according to the embodiment (shown in Fig. 19), the driver can totally check the rear views behind opened doors at the driver's seat so as to perform safety check for passengers who are getting off the vehicle.

Next, another embodiment of the present invention will be described.

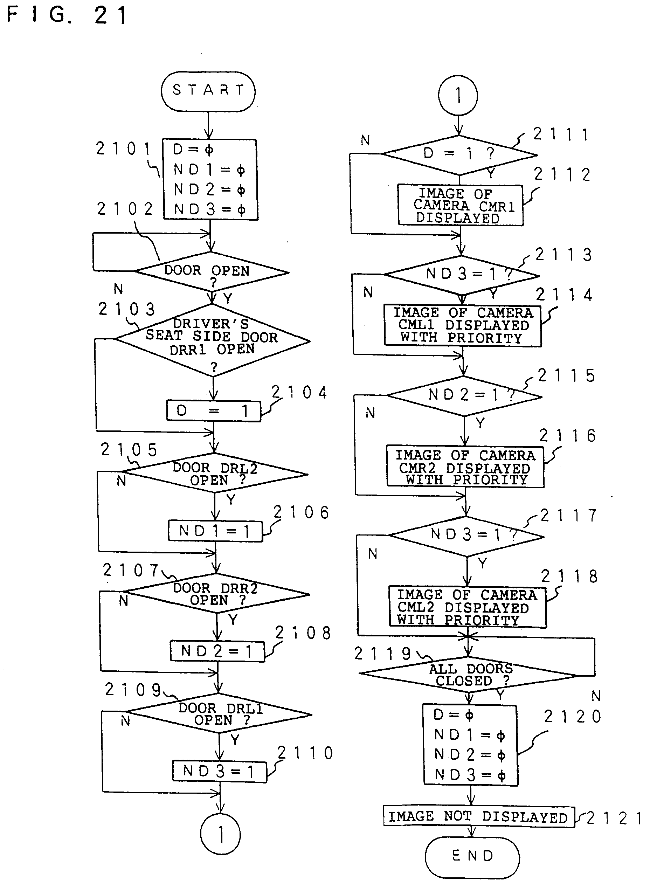

In this embodiment, the overall construction of the apparatus is the same as that shown in Fig. 11. However, in this embodiment, the main CPU 5 performs the following camera image selecting control corresponding to the opening operations of the doors of the vehicle. In other words, in this embodiment, priority orders are designated to all passenger seats. When a passenger seat side door with higher priority is opened, a camera image thereof is displayed with higher priority than camera images of passenger seats with lower priority. Next, the detailed control flow of this embodiment will be described with reference to a flow chart of Fig. 21.

In this case, the priority orders can be freely designated to the passenger seats. However, in this embodiment, the least priority order is designated to the driver's seat. Higher priority orders are designated to passenger seats that are farther from the driver's seat. As a specific example of the priority designation, priority orders are designated in the order of DRR1 -> DRL1 -> DRR2 -> DRL2 as shown in Fig. 12. In Fig. 21, D represents flag information corresponding to the door DRR1 of the driver's seat. ND1 represents flag information corresponding to the door of the passenger seat DRL1. ND2 is flag information corresponding to the door of the passenger seat DRR2. ND3 is flag information corresponding to the door of the passenger seat DRL2.

First, the door flag generating circuit 52 initializes the flag information D and ND1 to ND3 (namely, clears them to zero) (at step 2101), determines the open/closed states of the four switches SW1, SW2, SW3, and SW4 of the door open state detecting system 51, and checks the opening operations of the doors (at step 2102). When the switch SW1 is in the closed state (at step 2103), the door flag generating circuit 52 sets the flag information D corresponding to the door DRR1 of the driver's seat, adds the door ID information of the driver's seat to the flag information, and outputs the resultant information to the main CPU 5 (at step 2104). Likewise, when one of the switches SW2 to SW4 is in the closed state (at steps 2105, 2107, and 2109), the door flag generating circuit 52 sets the flag information ND1, ND2, and ND3 corresponding to the doors DRL1, DRR2, and DRL2 other than the door of the driver's seat, adds the ID information of the opened door to the flag information, and outputs the resultant information to the main CPU 5 (at steps 2106, 2108, and 2110).

The main CPU 5 successively reads the flag information D and ND1 to ND3 and causes a camera image on a passenger seat side door corresponding to the flag information that has been received first to be displayed on the monitor 4. When the main CPU 5 receives the next flag information, if the priority order of the door corresponding to the flag information is higher than that of the camera image that is being displayed, the main CPU 5 switches the current camera image into a camera image on the door corresponding to the flag information that has been newly received as a priority camera image. Thereafter, likewise, the CPU 5 causes a camera image with higher priority to be displayed corresponding to the priority order of the current camera image and corresponding to the flag information that has been newly received. This process is performed at steps 2111 to 2118 shown in Fig. 21.

Thereafter, when all the doors are closed, the door flag generating circuit 52 determines that all switches SW1 to SW4 are in the closed state (at step 2119) and resets all the flag information (at step 2120). Thus, the main CPU 5 causes the displaying of the camera image to be stopped (at step 2121).

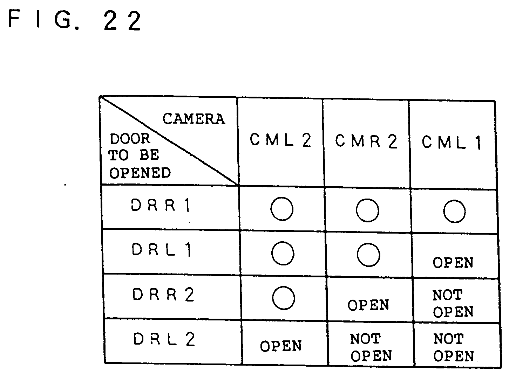

Fig. 22 is a table showing the relation between the open/closed states of the doors of the vehicle and the activated cameras.

Thus, according to the embodiment (shown in Fig. 21), since camera images on the rear passenger seat side doors that are most difficult to watch from the driver's seat are displayed with higher priority, the vehicle rear monitoring function of the apparatus can be more effectively used so as to improve the safety.

Since the vehicle rear safety checking apparatus according to the present invention may be modified in various manners, examples thereof will be described.

In the construction of which other media information such as television images is displayed on the monitor 4, when the main CPU 5 sends the ON signal to the monitor 4, the current image on the monitor 4 is forcedly switched to a camera image.

In the case of a slide door type vehicle, the camera angle controlling system 3 can be omitted.

The monitor screen can be divided into left and right portions. In other words, when left and right side doors are opened at the same time, images picked up by cameras disposed at these doors are displayed on the monitor at the same time.

The door open state detecting system 1 may be constructed so that when the door lock is released or a substance approaches or contacts the door knob, the door open state detecting system 1 supplies a door open state detection signal S1 to the main CPU 5.

In addition, unlike with the above-described embodiments of which the current image is switched to a camera image with higher priority, other methods are available.

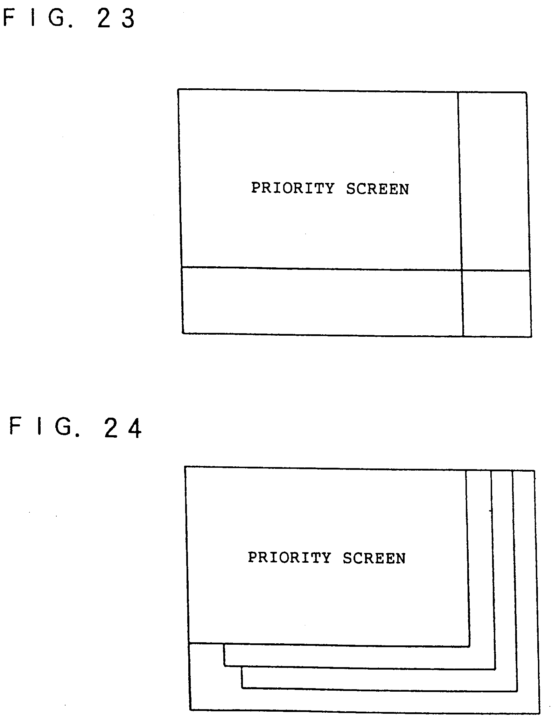

For example, as shown in Fig. 23, a monitor screen is divided in such a manner that camera images with higher priority orders are displayed in larger divided portions.

Alternatively, as shown in Fig. 24, camera images with higher priority orders are successively overlaid on those with lower priority orders.

As a camera image displaying means, a camera image may be projected on the windshield of the vehicle.

In the above-described embodiments, the door opening operation is determined by detecting a pre-operation performed before the door is opened. However, the door opening operation can be determined by monitoring the rotating state of the door.

For example, the voltage V_{A} supplied from the volume controller 17 shown in Fig. 4 is monitored. Thereafter, assuming that a time point of which the value of the voltage V_{A} varies is the start point of the opening operation of the door, a signal that represents the opening operation of the door is supplied to the main CPU 5. Thus, the CPU 5 causes the image picked up by the CCD camera 2 to be displayed on the monitor 4.

In the above-described embodiments, when the main CPU 5 detects the door opening operation, the main CPU 5 causes the image picked up by the CCD camera 2 to be displayed on the monitor 4. However, the image displayed on the monitor 4 is not limited to the image picked up when the door opening operation is detected. In other words, at least as long as the door is in the open state, the image picked up by the CCD camera 2 is continuously displayed.

In addition, as shown in Fig. 8, when the CCD camera 2 is disposed at the door end portion, a predetermined time period is required after the door opening operation is detected until a valid image for the rear check is obtained. This is because when the door opening operation is started, the CCD camera 2 has not been completely exposed to the outside as shown in Fig. 8.

Just after the door opening operation is started, a valid image useful for performing rear check is not displayed. To solve this program, the apparatus as shown in Fig. 1 is controlled in the following manner.

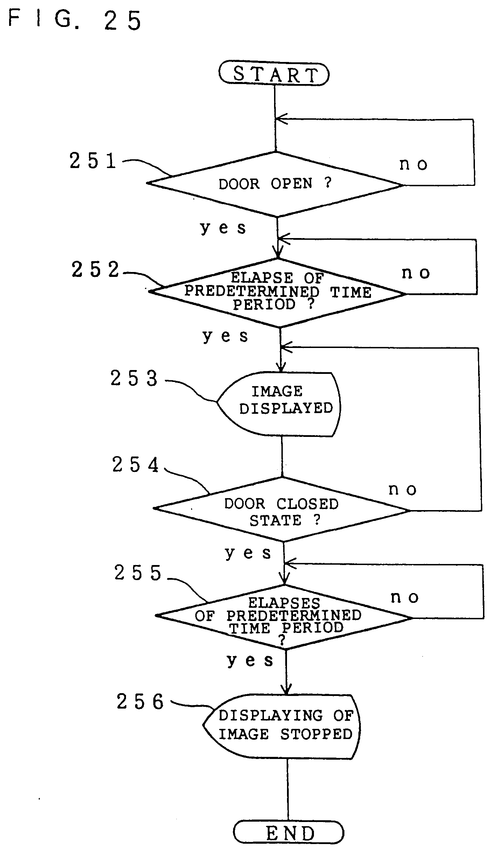

Fig. 25 is a flow chart showing the control procedure. At step 251, the main CPU 5 knows that the door is in the open state corresponding to the door open state detection signal S1 received from the door open state detecting system 1. When the door is open, the flow advances to step 252 (in the Y direction of the flow chart). At step 252, the main CPU 5 counts a predetermined time period. When the predetermined time period elapses, the flow advances to step 253. At step 253, an image is displayed.

The predetermined time period is preferably a time period after the door is opened until the CCD camera 2 is fully exposed to the outside as shown in Fig. 8. Alternatively, considering an allowance, the image may be displayed just before the CCD camera 2 is fully exposed to the outside. The predetermined time period can be experimentally obtained. Just before the CCD camera 2 is fully exposed or when the door opening operation is detected, if the CCD camera 2 starts picking up an image, the image can be prevented from getting disordered.

When the image is displayed at step 253, the flow advances to step 254. At step 254, it is determined whether or not the door is in the closed state. Unless the door is in the closed state, the flow enters a loop between steps 253 and 254. Thus, the image is continuously displayed at step 253. When the door is closed, the flow advances to step 255. At step 255, it is determined whether or not a predetermined time period elapsed after the door was closed. The displaying of the image is securely stopped at step 255 along with step 256. The predetermined time period at step 255 may be for example zero.

As described above, according to the embodiment (shown in Fig. 25), an invalid image that is not useful for a rear check can be prevented from being displayed just after the door opening operation is started.

Another embodiment that can solve the above-described program will be described.

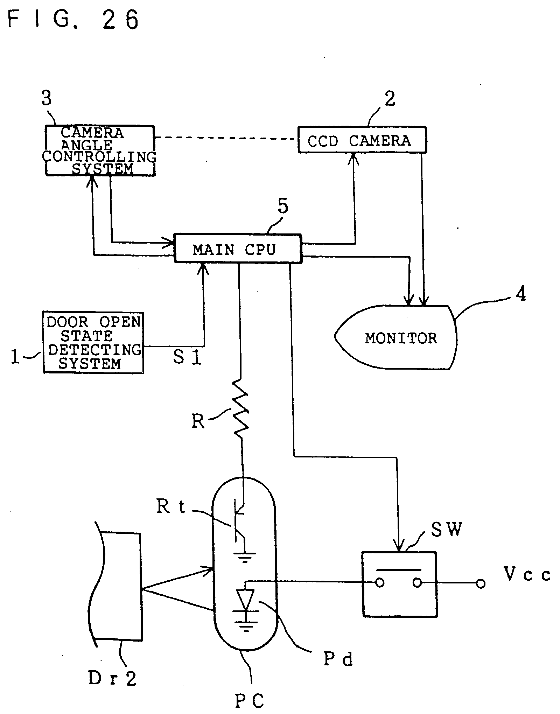

Fig. 26 is a block diagram showing the construction of this embodiment. In this embodiment, a detecting means for detecting whether or not the CCD camera 2 is exposed to the outside is added to the construction of the embodiment shown in Fig. 1. Since the other portions of the embodiment shown in Fig. 26 are the same as those shown in Fig. 1, their description is omitted.

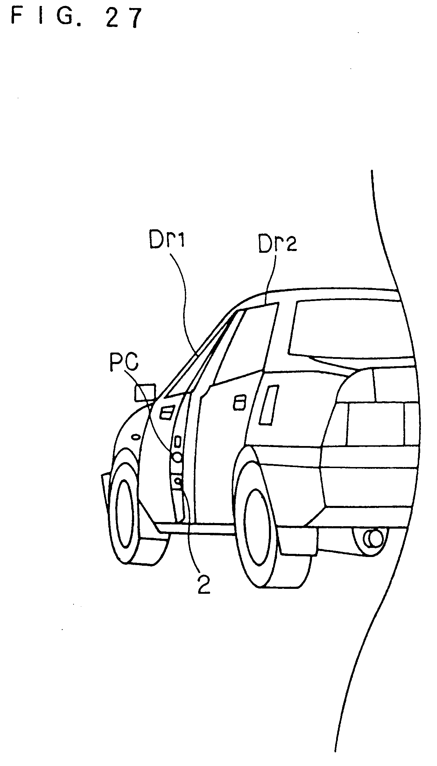

In Fig. 26, PC is a photo-coupler that constructs a part of the detecting means. The photo-coupler PC is constructed of a light emitting diode Pd (that is a known light emitting device) and a photo-transistor Pt (that is a light receiving device). As shown in Fig. 27, the photo-coupler PC is disposed at the door end portion of the door Dr1 along with the CCD camera 2. The photo-coupler PC is disposed in such a manner that light emitted from the light emitting diode Pd is reflected and entered into the photo-transistor Pt when the door Dr1 is closed (namely, when the CCD camera 2 is not exposed to the outside). SW is a switch that turns on/off the function of the photo-coupler PC. The cathode of the photo-coupler PC is connected to a voltage source V_{CC} through a switch SW. The cathode voltage is applied corresponding to a control signal received from the main CPU 5. The collector of the photo-transistor Pt is connected to the main CPU 5 through a resistor R.

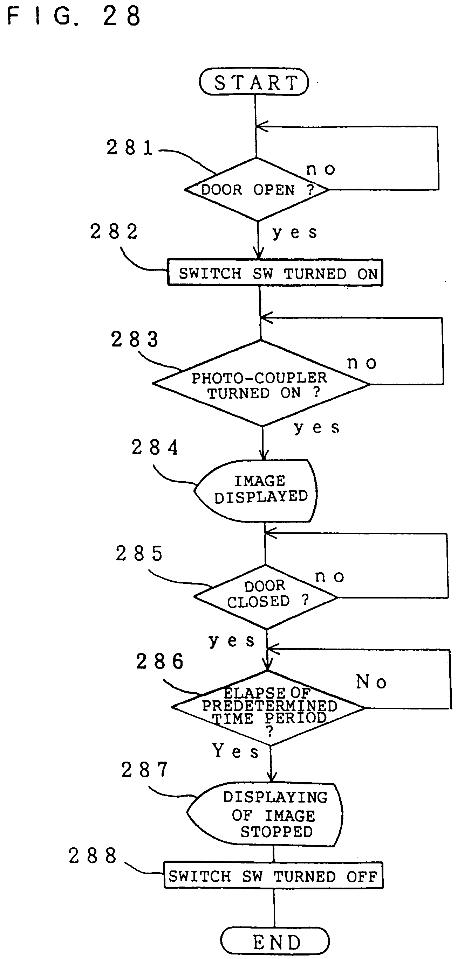

Next, the operation of the embodiment (shown in Fig. 26) will be described with reference to a flow chart shown in Fig. 28. First, at step 281, the door open/closed state is detected. At this point, the open/closed state of the door Dr1 at which the CCD camera 2 is disposed is detected. When the open state of the door Dr1 is detected, the flow advances to step 282. At step 282, the switch SW is turned on so that the limit emitting diode Pd emits light. Thus, before the door Dr1 is opened, the light emitting diode Pd does not emit light, thereby reducing the power consumption of the apparatus.

At step 283, it is determined whether or not the photo-coupler PC is in the ON state. When the photo-coupler PC is in the ON state, since the photo-transistor Pt receives light emitted from the light emitting diode Pd, the CCD camera 2 is not exposed to the outside. When the photo-coupler PC is not in the ON state, it is determined that the CCD camera 2 is exposed to the outside. Thus, the flow advances to step 284. At step 284, an image (picked up by the CCD camera 2) is displayed.

Step 284 forms a loop along with step 285. In this loop, until the door is closed, the image is continuously displayed. When it is determined that the door Dr1 is in the closed state at step 285, the flow advances to step 286. After a predetermined time period elapses, the flow advances to step 287. At step 287, the displaying of the image is stopped. At step 286, the displaying of the image is securely stopped after the door Dr1 is closed along with step 287. The predetermined time period may be zero. After the displaying of the image is stopped, the switch SW is turned off at step 288 and thereby the emitting of light of the light emitting diode Pd is stopped.

In the embodiment (shown in Fig. 26), as the means for detecting the exposure of the CCD camera 2, the photo-coupler PC is disposed at the door end portion. However, the detecting means is not limited to such a construction. For example, the rotating state of the door can be monitored. When the door is rotated for a predetermined angle or more, it is determined that the CCD camera 2 is exposed to the outside. It is not necessary to fully expose the CCD camera 2 to the outside as long as the CCD camera 2 can pick up a rear image of the vehicle.

The monitor 4 can be disposed at a position of which the driver and another passenger on the front seat side can watch an image of the rear of the vehicle. Alternatively, the monitor 4 can be disposed at a position of which passengers on the rear seats can watch the image. As another alternative way, the same monitors may be disposed as dedicated monitors for passenger seats.

### Industrial Utilization

As described above, the vehicle rear safety checking apparatus according to the present invention can be used for every vehicle as an apparatus for performing a safety check for passengers who are getting off the vehicle.

## Claims

1. A vehicle rear safety checking apparatus, comprising:
pick-up-image means for picking up an image behind a vehicle;
displaying means for displaying the image picked up by said pick-up-image means;
detecting means for detecting an opening operation of a door disposed on the vehicle; and
controlling means for causing said displaying means to display the image picked up by said pick-up-image means when the opening operation of the door is detected by said detecting means.

2. The vehicle rear safety checking apparatus as set forth in claim 1,
wherein said pick-up-image means is adapted for picking up an image behind the door.

3. The vehicle rear safety checking apparatus as set forth in claim 1,
wherein said pick-up-image means is disposed at the door.

4. The vehicle rear safety checking apparatus as set forth in claim 3, further comprising:
means for keeping the pick-up-image direction of said pick-up-image means almost constant against an open/close operation of the door.

5. The vehicle rear safety checking apparatus as set forth in claim 1,
wherein said detecting means is adapted for detecting a lock releasing operation of the door as the opening operation of the door.

6. The vehicle rear safety checking apparatus as set forth in claim 1,
wherein said detecting means is adapted for detecting the approaching or contacting of another substance to a door knob inside the vehicle as the door opening operation.

7. A vehicle rear safety checking apparatus, comprising:
pick-up-image means for picking up an image behind a vehicle;
displaying means for displaying the image picked up by said pick-up-image means;
speed detecting means for detecting the speed of the vehicle; and
controlling means for causing said displaying means to display the image picked up by said pick-up-image means when the speed detected by said speed detecting means drops to a predetermined value or less.

8. The vehicle rear safety checking apparatus as set forth in claim 7, further comprising:
door open/close detecting means for detecting an opening operation of a door disposed on the vehicle,
wherein an image displayed by said displaying means is stopped when a predetermined time period elapses after the speed detected by said speed detecting means drops to the predetermined value or less.

9. The vehicle rear safety checking apparatus as set forth in claim 7,
wherein the predetermined value of the vehicle is a value equivalent to an almost stop state of the vehicle.

10. The vehicle rear safety checking apparatus as set forth in claim 8,
wherein the predetermined value of the vehicle is a value equivalent to an almost stop state of the vehicle.

11. A vehicle rear safety checking apparatus for use with a vehicle having a left-side door and a right-side door, comprising:
two or more pick-up-image means for monitoring a rear left side image and a rear right side image behind the vehicle;
displaying means for displaying the images picked up by said two or more pick-up-image means;
detecting means for detecting the opening of each of the doors disposed on the vehicle; and
controlling means for causing said displaying means to display an image behind a door that is opened as a priority image over images behind the other doors when the opening of the door is detected by said detecting means.

12. A vehicle rear safety checking apparatus for use with a vehicle having front seat side doors and rear seat side doors, comprising:
a plurality of pick-up-image means disposed at the doors or portions that are rotated along with the doors and adapted for picking up images behind the vehicle;
displaying means for displaying the images picked up by said plurality of pick-up-image means;
detecting means for detecting the opening of each of the doors disposed on the vehicle; and
controlling means for causing said displaying means to display an image picked up by said pick-up-image means disposed at one of the rear seat side doors or a portion rotated along with the door as a priority image over images picked up by the other pick-up-image means when the opening of the door is detected by said detecting means.

13. A vehicle rear safety checking apparatus for use with a vehicle having left side doors and right side doors, comprising:
two or more pick-up-image means for monitoring a rear left image and a rear right image behind the vehicle;
displaying means for displaying the images picked up by said pick-up-image means;
detecting means for detecting the opening of each of the doors disposed on the vehicle; and
controlling means for causing said displaying means to display an image behind a door of other than a driver's seat as a priority image over images behind the other doors when the opening of the door is detected by said detecting means.

14. A vehicle rear safety checking apparatus, comprising:
a plurality of pick-up-image means disposed at doors of a vehicle or portions rotated along with the doors and adapted for picking up images behind the vehicle;
displaying means for displaying the images picked up by said plurality of pick-up-image means;
detecting means for detecting the opening of each of the doors disposed on said vehicle; and
controlling means for causing said displaying means to display an image behind a door that is opened and that is the farthest from a driver's seat as a priority image over images behind the other doors when the opening of the door is detected by said detecting means.

15. A vehicle rear safety checking apparatus, comprising:
pick-up-image means for picking up an image behind a vehicle;
displaying means for displaying the image picked up by said pick-up-image means;
detecting means for detecting an opening state of a door disposed on the vehicle; and
controlling means for causing said displaying means to display the image picked up by said pick-up-image means when the opening state of the door is detected by said detecting means.

16. The vehicle rear safety checking apparatus as set forth in claim 15,
wherein said detecting means is adapted for monitoring a rotating state of the door so as to detect the opening state of the door.

17. The vehicle rear safety checking apparatus as set forth in claim 1,
wherein said pick-up-image means is disposed at a rear end portion of the door and exposed for taking the image behind the vehicle when the door is open.

18. The vehicle rear safety checking apparatus as set forth in claim 15,
wherein said pick-up-image means is disposed at a rear end portion of the door and exposed for taking the image behind the vehicle when the door is open.

19. The vehicle rear safety checking apparatus as set forth in claim 17, further comprising:
controlling means for causing said displaying means to display the image picked up by said pick-up-image means when a predetermined time period elapses after the opening of the door is detected by said detecting means.

20. The vehicle rear safety checking apparatus as set forth in claim 18, further comprising:
controlling means for causing said displaying means to display the image picked up by said pick-up-image means when a predetermined time period elapses after the opening of the door is detected by said detecting means.

21. The vehicle rear safety checking apparatus as set forth in claim 17, further comprising:
exposing state detecting means for detecting an exposing state of said pick-up-image means; and
controlling means for causing said displaying means to display the image picked up by said pick-up-image means when the exposing state of said pick-up-image means is detected by said exposing state detecting means.

22. The vehicle rear safety checking apparatus as set forth in claim 18, further comprising:
exposing state detecting means for detecting an exposing state of said pick-up-image means; and
controlling means for causing said displaying means to display the image picked up by said pick-up-image means when the exposing state of said pick-up-image means is detected by said exposing state detecting means.
